# EUROPEAN PATENT APPLICATION

(11) **EP 4 575 585 A1**
(43) Date of publication of application: **25.06.2025**
(21) Application number: 23217447.4
(22) Date of filing: 18.12.2023
(51) Int. Cl.: G01T 1/17, G01T 7/00, G01T 1/24

(54) **DIRECT CONVERSION X-RAY DETECTOR**

(71) Applicant: Koninklijke Philips N.V., 5656 AG Eindhoven (NL)
(72) Inventor: HERRMANN, Christoph, Eindhoven (NL); LIVNE, Amir, Eindhoven (NL)
(74) Representative: Philips Intellectual Property & Standards

(57) **Abstract**

A system processes a pixel signal received from a direct conversion X-ray detector. An output signal is generated by an analog front end comprising an amplifier circuit representing the pixel signal. A passive leakage current compensation circuit comprises a first current source for generating a dark-current compensation current and injecting the dark-current compensation current to the input of the amplifier. An active leakage current compensation circuit comprises a second current source for generating a background-current compensation current and injecting the background-current compensation current to the input to the amplifier. By combining active and passive baseline compensation at the same time, compensation is possible over a wider range, and a lower cost detector with larger baseline current can be used.

## Description

### FIELD OF THE INVENTION

This invention relates to direct conversion X-ray detectors.

### BACKGROUND OF THE INVENTION

Direct-conversion detectors for SPCCT (Spectral Photon Counting CT) exhibit both a small dark current and, with changing X-ray flux, a changing background current caused by charge injection. This applies for example to detectors based on Cd[Zn]Te sensors (CZT sensors), but also to GaAs or even Silicon detectors.

Charge injection originates from changes in the metal-semiconductor interface in response to electric-field changes inside the crystal caused by charge generated by the conversion X-ray photons into electron-hole pairs. Changing background currents entail count instability, which becomes visible in image artefacts.

A dark current results in a constant baseline (BL) shift at the output of the analog front end (AFE) and therefore changes the energy levels defined by the comparator thresholds, which determine the energy windows of the SPCCT detector. Hence, before running measurements, the dark current is eliminated at the input node of the AFE in each pixel by adding (or subtracting) a compensation current, which is as large as needed to bring the AFE output baseline back to the baseline. This process is a calibration procedure, in which the magnitude of the required compensation current is determined, and it is often called "passive leakage current compensation" (pLCC) or "static leakage current compensation".

Changing background currents can efficiently be compensated for by means of a BL restorer (BLR), which samples the true baseline in phases between pulses, and, in a feedback loop, adjusts the compensation current continuously. With increasing X-ray flux, the number of such phases becomes smaller and smaller. At a certain X-ray flux, sampling of the BL has to be gated, otherwise a wrong BL level is sampled, and the BLR would pull the pulse train to a wrong BL thus losing its ability to eliminate image artefacts.

When gated, the BLR should keep the compensation current at the level which it had immediately before gating started, until the flux level is low enough to resume baseline sampling. The process of compensating for background currents using a BLR is also called active leakage current compensation (aLCC) or dynamic leakage current compensation.

A BLR is also capable of compensating for simple dark currents, and this is also a convenient solution to deal with dark currents, since no pLCC calibration phase is needed. The AFE is ready for measurement immediately. However, a BLR has a certain maximum current capacity, which it can compensate for. Hence, any dark current, which the BLR compensates, reduces the amount of current still available for compensation of background currents.

As a consequence, sensor samples of which the maximum sum of dark and background current, Itotal, exceeds the BLR maximum current capacity cannot be selected to build detectors.

It would be desirable to enable the allowed current Itotal to be made larger, so that sensor specification could be relaxed, for example so that a higher yield of CZT samples becomes possible reducing CZT sensor cost.

### SUMMARY OF THE INVENTION

The invention is defined by the claims.

According to examples in accordance with an aspect of the invention, there is provided a system for processing a pixel signal received from a direct conversion X-ray detector, comprising:
an input for receiving the pixel signal;
an analog front end for generating an output signal representing the pixel signal;
a passive leakage current compensation circuit comprising a first current source for generating a dark-current compensation current and injecting the dark-current compensation current to the analog front end; and
an active leakage current compensation circuit comprising a second current source (40) for generating a background-current compensation current and injecting the background-current compensation current to the analog front end,
wherein the operation of the active leakage current compensation circuit is at the same time as the operation of the passive leakage current compensating circuit.

This system thus combines pLCC and aLCC and an analog front end, for use with a direct conversion X-ray detector. Thus, a pure dark current is compensated by pLCC, and any background current caused e.g., by changes in the metal-to-semiconductor interface due to changes inside the E-field because of trap dynamics, is compensated for by aLCC. The two compensations are provided at the same time, so that two compensation currents are injected to the analog front end. Each compensation circuit has a partial contribution to the full compensation current. This helps to significantly increase the maximum total current (dark current and background current) that can be compensated. Hence, for CZT detectors, CZT crystals with a higher dark current can be used for producing a detector, so that CZT cost can be reduced.

By separating the compensation functions, the AFE noise may also be reduced because the range of Itotal is split into one which is dedicated to the compensation of a dark current, and one which is dedicated to eliminating a background current. Also, a smaller current range dedicated to background currents may simplify the BLR implementation.

The pixel signal comprises a train of current pulses received from a CZT pixel. The output signal from the analog front end for a single current pulse represents the charge carried by the pixel current pulse.

The passive leakage current compensation circuit for example comprises a current digital-to-analog converter for generating a compensation current, which is proportional to the digital-to-analog converter value.

The compensation current generated by the passive leakage current compensation circuit is for example subtracted from the input node of the AFE to compensate for the dark current. The compensation current is step-by-step increased by increasing the digital to analog converter value.

Note that current subtraction may be considered equivalent to current addition, in that the effect depends on the direction of current flow. Thus, current "subtraction" is referred to simply for ease of understanding. Similarly "injecting" a current to a node may result in a current addition or a current subtraction.

The passive leakage current compensation circuit for example comprises a comparator which receives the output voltage of the analog front end.

The output voltage of the AFE is observed at the input of the comparator. The digital to analog converter value used determines the compensation current, for which the AFE output voltage reaches the intended baseline. This desired dark current compensation is for example represented by a reference voltage to the comparator. The corresponding DAC-value is fixed, hence providing passive compensation.

Instead of digital to analog conversion, an analog solution can use a current mirror, in which the gate-source voltage of one of the MOSFETs of the current mirror is adjusted in such a way that the dark current is drained by the current mirror branch of this MOSFET and this gate-source voltage is stored by means of a capacitor.

The fixed value for the dark current compensation is obtained by a calibration process.

The active leakage current compensation circuit for example comprises:
a baseline restorer circuit which samples the output voltage of the analog front end;
a pulse detector for detecting a pixel signal pulse;
a rate detector for determining the pulse rate at the output of the analog front end; and
a controller configured to control the second current source in dependence on the pulse detector and rate detector outputs.

The pulse detector makes sure that while the AFE processes a pulse, the AFE output voltage is not sampled, since otherwise the wrong baseline would be sensed. If the rate detected by the rate detector exceeds a certain threshold, sampling of the baseline is switched off, and the active leakage current compensation current reached up to this point is frozen. Thus, any additional background current as reached in the sensor pixel for photon rates not exceeding the threshold (positive or negative) in addition to the dark current is compensated for by the second current source.

The invention also provides a direct conversion X-ray detector, comprising:
an X-ray radiation source;
an array of detector pixels;
the system as defined above for processing pixel signals received from the detector pixels; and
a counter arrangement for generating pixel counts from the output signals at the output of the analog front end.

The invention also provides a method for processing a pixel signal received from a direct conversion X-ray detector, comprising:
receiving the pixel signal;
generating an output signal representing the pixel signal using an analog front end;
providing passive leakage current compensation by controlling a first current source to generate a dark-current compensation current and injecting the dark-current compensation current to the analog front end; and
providing active leakage current compensation by controlling a second current source to generate a background-current compensation current and injecting the background-current compensation current to the analog front end,
wherein the operation of the active leakage current compensation circuit is at the same time as the operation of the passive leakage current compensating circuit.

This provides the processing method implemented by the system defined above.

The method for example comprises obtaining the dark-current compensation current from a calibration process.

The active leakage current compensation preferably comprises:
sampling the output voltage of the analog front end;
detecting a pixel signal pulse;
determining the pulse rate at the output of the analog front end; and
controlling the second current source in dependence on the detected pixel signal pulses and determined pulse rate.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows in simplified form a circuit including the analog front end of a direct conversion X-ray detector;
Fig. 2 shows a more detailed circuit diagram for the circuit of Fig. 1;
Fig. 3 shows a method for processing a pixel signal received from a direct conversion X-ray detector; and
Fig. 4 schematically illustrates a CZT direct conversion X-ray detector.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system which processes a pixel signal received from a direct conversion X-ray detector. An output signal is generated by an amplifier circuit representing the pixel signal. A passive leakage current compensation circuit comprises a first current source for generating a dark-current compensation current and injecting the dark-current compensation current to the input of the amplifier. An active leakage current compensation circuit comprises a second current source for generating a background-current compensation current and injecting the background-current compensation current to the input to the amplifier. By combining active and passive baseline compensation at the same time, compensation is possible over a wider range, and a lower cost detector with larger baseline current can be used.

The invention relates to the analog front end of a direct conversion X-ray detector.

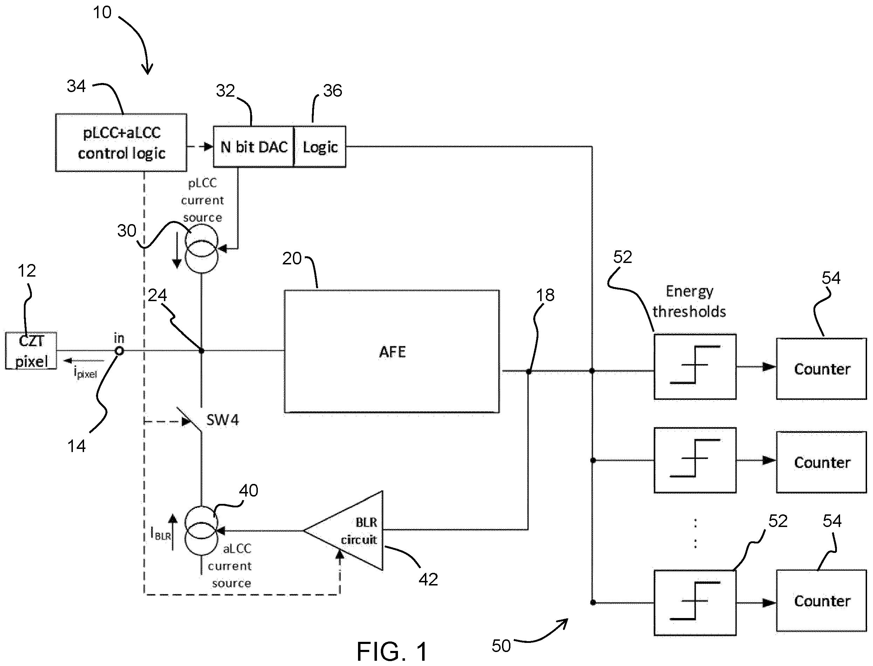

Fig 1 shows in simplified form a circuit 10 which comprises the analog front end. It is used to process a pixel signal received from a pixel 12 of a CZT direct conversion X-ray detector. The pixel signal comprises a train of current pulses received from a CZT pixel.

The circuit of Fig. 1 is repeated for each pixel of the array of detector pixels, and the signal processing for each pixel takes place in parallel.

The circuit 10 comprises an input 14 for receiving the pixel signal;

An analogue front end 20,
is used to generate an output signal, at an output node 18, representing the pixel signal. The output signal from the analog front end for a single current pulse represents the charge carried by the pixel current pulse.

A subtraction node 24 is provided at the input to the analog front end 20.

A passive leakage current compensation circuit is used to subtract a current from the subtraction node 24. It comprises a first current source 30 for generating a dark-current compensation current. The dark-current compensation current is thus injected to the analog front end 20 at the subtraction node 24.

The passive leakage current compensation circuit comprises a current digital-to-analog converter 32 (e.g., 10 bit) for generating a compensation current, which is proportional to the digital-to-analog converter value.

The compensation current generated by the passive leakage current compensation circuit is for example subtracted from the input node of the analog front end 20 to compensate for the dark current. In this way, a corrected signal (corrected for dark current) is provided to the analog front end 20. Compensation control logic 34 outputs the digital value of the compensation current. By increasing the digital to analog converter value, the analog current can be increased in stepwise manner.

The passive leakage current compensation circuit for example comprises a comparator which forms part of feedback logic 36. This feedback logic receives the output voltage of the analog front end 20 from output node 18. The output voltage of the analog front end 20 is in this way observed at the input of the feedback logic 36. The digital to analog converter value used determines the compensation current, for which the analog front end output voltage reaches the intended baseline.

This intended baseline for dark current compensation is obtained during a calibration phase. The calibration phase is for example performed shortly before a scan.

The desired baseline current for dark current compensation is for example represented by a reference voltage to the comparator. The corresponding DAC-value is fixed, hence providing passive compensation. Instead of generating the compensation current using a digital to analog converter, a current mirror can be used, in which the gate-source voltage of one of the MOSFETs of the current mirror is adjusted in such a way that the desired dark current is drained by the current mirror branch of this MOSFET and this gate-source voltage is stored by means of a capacitor.

The circuit 10 additionally comprises an active leakage current compensation circuit comprising a second current source 40 for generating a background-current compensation current. This current is also subtracted from the subtraction node 24. Thus, the background-current compensation current is again injected to the analog front end.

This system forms part of a direct conversion X-ray detector. This system combines pLCC and aLCC. Thus, a pure dark current is compensated for by pLCC, and any background current caused e.g., by changes in the metal-to-semiconductor interface due to changes inside the E-field because of trap dynamics is compensated for by aLCC. This helps to significantly increase the maximum total current (dark current and background current) that can be compensated. Hence, CZT crystals with a higher dark current can be used for producing a detector, so that CZT cost can be reduced.

The active leakage current compensation circuit may be implemented as described in WO 2017/046289, which is included here for reference. It comprises a baseline restorer circuit 42 which, in a continuous feedback loop, samples the output voltage of the analog front end 20.

A pulse detector is used for detecting the pixel signal (which is in the form of a pixel current pulse) and a rate detector determines the pulse rate at the output of the analog front end. Both are part of baseline restorer 42. The pulse detector makes sure that while the analog front end processes a pulse, the output voltage is not sampled, since otherwise the wrong baseline would be sensed.

If the rate detected by the rate detector exceeds a certain threshold, sampling of the baseline is switched off, since due to the too high pulse rate, a correct sampling of the baseline is no longer possible, and the active leakage current compensation current reached up to this point is frozen. In an example, the predefined rate limit may be 1 Mcps, 2 Mcps, 5 Mcps , 10 Mcps or 20 Mcps. The term Mcps refers to Mega counts per second.

The baseline restorer circuit 42 controls the second current source 40 in dependence on the pulse detector and rate detector outputs.

Switch SW4 is used to activate the baseline restorer circuit, i.e., if SW4 is open, active leakage current compensation is not operational, and the second current source 40 is isolated from the subtraction node 24.

Thus, any additional background current as reached in the sensor pixel for photon rates not exceeding the threshold (positive or negative) in addition to the dark current is compensated for by the second current source.

Fig. 1 additionally shows the evaluation system 50 to resolve the output signal from the analog front end 20 into different value levels and to provide an evaluation signal on the basis of the resolving results.

The evaluation system 50 is used to determine the energy corresponding to the value of the pulses of the output signal. In the example shown, the evaluation system 50 comprises a plurality of discriminators 52, each having different threshold values for discriminating the output signal at the output node 18. If the output signal exceeds the respective threshold value of a discriminator 52, a corresponding counter 54 is incremented. At an end of an evaluation time period, the number of counts at each counter 54 corresponds to the detected X-ray photons within a respective energy interval. The number at the counters 54 may be read out by a readout circuit which provides a respective evaluation signal representing the numbers of the counters 54.

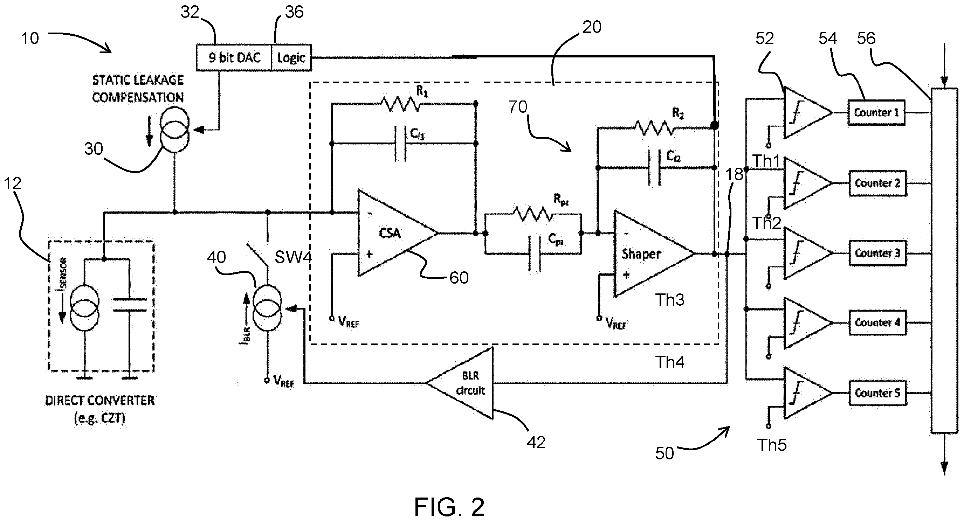

Fig. 2 shows one example of a possible implementation of the analog front end 20. It is a combination of charge sensitive amplifier 60, comprising an opamp with an integrating capacitive negative feedback loop, with pole-zero cancellation. The amplifier is followed by a shaping stage 70, which performs pulse shaping (using the so-called "continuous reset"). More details about the analog front end can be found in Steadman, Herrmann, Livne, ChromAIX2 - A large area, high count-rate energy-resolving photon counting ASIC for a Spectral CTprototype NIM A 2017*,* which is included here for reference. Other implementations of the analog front end are equally possible, such as an implementation with only a charge sensitive amplifier without a shaping stage, or an implementation with only a shaping stage and without a charge sensitive amplifier.

Fig. 2 shows that the evaluation system 50 has a data readout stage 56.

The basic idea of using pLCC and aLCC at the same time can also be combined with other types of analog front end e.g., such as described in US 10/890674 or in US 2023/029181.

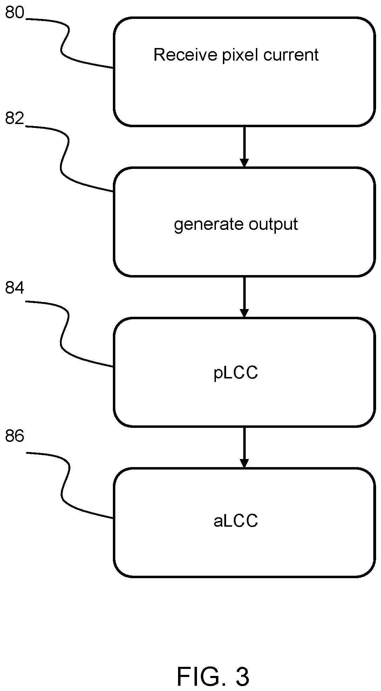

Fig. 3 shows a method for processing a pixel signal received from a CZT direct conversion X-ray detector.

The method comprises:
in step 80, receiving the pixel signal;
in step 82, generating an output signal representing the pixel signal using a analog front end;
in step 84, providing passive leakage current compensation by controlling a first current source to generate a dark-current compensation current and injecting the dark-current compensation current to the analog front end; and
in step 86 providing active leakage current compensation by controlling a second current source to generate a background-current compensation current and injecting the background-current compensation current to the analog front end.

As explained above, the passive leakage current compensation is set once before the scan during the calibration phase, whereas the active leakage current compensation runs during a scan. The steps of the method as listed above are thus not intended to limit the order in which the signal processing steps take place. Indeed, the output signal is generated by the analog front end while (not before) the two current compensations take place.

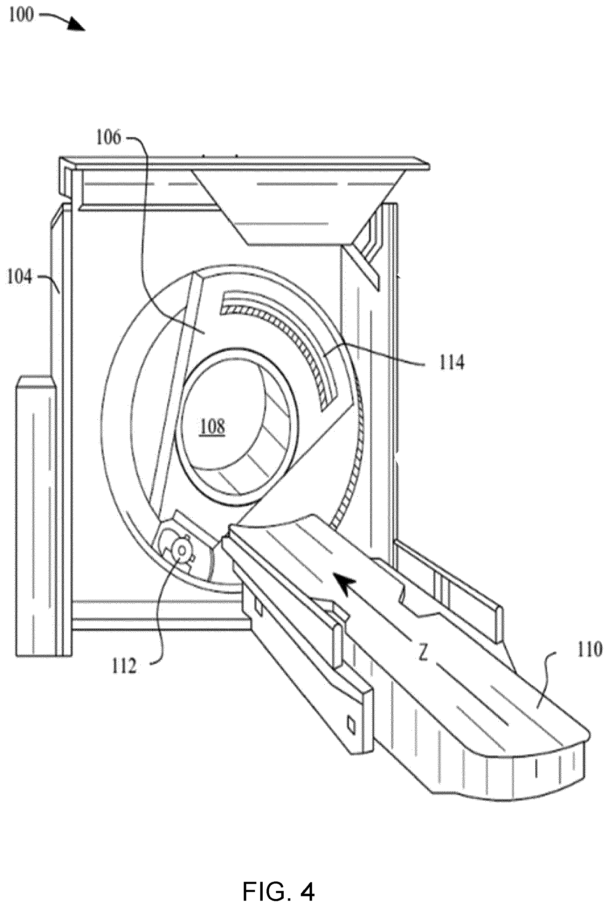

Fig. 4 schematically illustrates a CZT direct conversion X-ray detector 100. The detector 100 includes a generally stationary gantry 104 and a rotating gantry 106, which is rotatably supported by the stationary gantry 104 and rotates around an examination region 108 about a z-axis. A subject support 110, such as a couch, supports an object or subject in the examination region 108.

A radiation source 112, such as an X-ray tube, is rotatably supported by the rotating gantry 106, rotates with the rotating gantry 106, and emits radiation that traverses the examination region 108.

A radiation sensitive detector array 114 subtends an angular arc opposite the radiation source 112 across the examination region 108. The detector array 114 has an array of detector pixels.

The radiation sensitive detector array 114 detects radiation traversing the examination region 108 and generates an electrical signal(s) (projection data) indicative thereof.

The direct conversion detector for example uses a single broad spectrum X-ray tube, and radiation sensitive detector array 112 includes energy-resolving detectors in the form of direct conversion photon counting detectors.

The detected signal is processed using a reconstructor 116 to reconstruct spectral volumetric image data. The leakage current compensation approach described above compensates for leakage current before the image reconstruction.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A system for processing a pixel signal received from a direct conversion X-ray detector, comprising:
an input (14) for receiving the pixel signal;
an analog front end (20), for generating an output signal representing the pixel signal;
a passive leakage current compensation circuit comprising a first current source (30) for generating a dark-current compensation current and injecting the dark-current compensation current to the analog front end; and
an active leakage current compensation circuit comprising a second current source (40) for generating a background-current compensation current and injecting the background-current compensation current to the analog front end,
wherein the operation of the active leakage current compensation circuit is at the same time as the operation of the passive leakage current compensating circuit.

2. The system of claim 1, wherein the passive leakage current compensation circuit comprises a current digital-to-analog converter (32) for generating a compensation current, which is proportional to the digital-to-analog converter value.

3. The system of claim 2, wherein the passive leakage current compensation circuit comprises a comparator (36) which receives the output voltage of the analog front end.

4. The system of any one of claims 1 to 3, wherein the dark-current compensation current is obtained from a calibration process.

5. The system of any one of claims 1 to 4, wherein the active leakage current compensation circuit comprises:
a baseline restorer circuit (42) which samples the output voltage of the analog front end;
a pulse detector for detecting a pixel signal pulse;
a rate detector for determining the pulse rate at the output of the analog front end; and
a controller (34) configured to control the second current source in dependence on the pulse detector and rate detector outputs.

6. A direct conversion X-ray detector, comprising:
an X-ray radiation source (112)
an array (114) of detector pixels;
the system of any one of claims 1 to 5 for processing pixel signals received from the detector pixels; and
a counter arrangement (50) for generating pixel counts from the output signals at the output of the analog front end.

7. A method for processing a pixel signal received from a direct conversion X-ray detector, comprising:
(80) receiving the pixel signal;
(82) generating an output signal representing the pixel signal using an analog front end;
(84) providing passive leakage current compensation by controlling a first current source to generate a dark-current compensation current and injecting the dark-current compensation current to the analog front end; and
(86) providing active leakage current compensation by controlling a second current source to generate a background-current compensation current and injecting the background-current compensation current to the analog front end,
wherein the operation of the active leakage current compensation circuit is at the same time as the operation of the passive leakage current compensating circuit.

8. The method of claim 7, comprising obtaining the dark-current compensation current from a calibration process.

9. The method of claim 7 or 8, wherein the active leakage current compensation comprises:
sampling the output voltage of the analog front end;
detecting a pixel signal pulse;
determining the pulse rate at the output of the analog front end; and
controlling the second current source in dependence on the detected pixel signal pulses and determined pulse rate.
